# EUROPÄISCHE PATENTANMELDUNG

(11) **EP 4 011 537 A1**
(43) Veröffentlichungstag der Anmeldung: **15.06.2022**
(21) Anmeldenummer: 20213658.6
(22) Anmeldetag: 14.12.2020
(51) Int. Cl.: B23D 61/18, B22F 12/00, B22F 7/06, B22F 5/00, C22C 26/00

(54) **VORRICHTUNG ZUM POSITIONIEREN VON PARTIKELN UND VERFAHREN ZUM POSITIONIEREN VON PARTIKELN MITTELS DER VORRICHTUNG**

(71) Anmelder: Hilti Aktiengesellschaft, 9494 Schaan (LI)
(72) Erfinder: Zivcec, Maria, 9470 Buchs (CH); Abu Antoun, Chafic, 9470 Buchs (CH); Kinkeldei, Thomas, 80469 München (DE)
(74) Vertreter: Hilti Aktiengesellschaft Corporate Intellectual Property

(57) **Zusammenfassung**

Vorrichtung zum Positionieren von Partikeln (51), aufweisend eine Aufnahmeeinrichtung (11) mit einer Platte (16), in der erste Aufnahmeöffnungen (17) und zweite Aufnahmeöffnungen (18) angeordnet sind, einen Generator (12) und eine Verbindungseinrichtung mit einen ersten und zweiten Verbindungsleitungen, die die ersten Aufnahmeöffnungen (17) bzw. die zweiten Aufnahmeöffnungen (18) mit dem Generator (12) verbinden. Die Platte (16) ist als Leiterplatte ausgebildet und die ersten und zweiten Aufnahmeöffnungen (17, 18) sind mit einem elektrisch leitenden Material (42) beschichtet und/oder befüllt. Der Generator (12) ist als elektrische Spannungsquelle ausgebildet und die ersten und zweiten Verbindungsleitungen sind als elektrische Verbindungsleitungen ausgebildet.

## Beschreibung

### Technisches Gebiet

Die vorliegende Erfindung betrifft eine Vorrichtung zum Positionieren von Partikeln gemäß dem Oberbegriff des Anspruchs 1 sowie ein Verfahren zum Positionieren von Partikeln mittels der Vorrichtung gemäß dem Oberbegriff des Anspruchs 13.

### Stand der Technik

Aus EP 2 409 813 B1 ist eine Vorrichtung zum Positionieren von Partikeln, die insbesondere als Hartstoffpartikel für Bearbeitungssegmente ausgebildet sind, bekannt. Die Vorrichtung umfasst eine Aufnahmeeinrichtung, einen Generator, der als Unterdruckeinrichtung ausgebildet ist, eine Verbindungseinrichtung, die die Aufnahmeeinrichtung mit dem Generator verbindet, eine Schalteinrichtung und eine Kontrolleinrichtung, die mit dem Generator und der Schalteinrichtung verbunden ist.

Die Aufnahmeeinrichtung umfasst eine als Saugplatte ausgebildete Platte, in der eine erste Aufnahmeöffnung und eine zweite Aufnahmeöffnung angeordnet sind. Die Verbindungseinrichtung umfasst eine erste Verbindungsleitung, die die erste Aufnahmeöffnung über eine erste Verbindung mit dem Generator verbindet, und eine zweite Verbindungsleitung, die die zweite Aufnahmeöffnung über eine zweite Verbindung mit dem Generator verbindet. Die Schalteinrichtung umfasst ein erstes Schaltelement in Form eines ersten Ventilelementes, das in der ersten Verbindungsleitung angeordnet ist und ausgebildet ist, die erste Verbindung zu aktivieren oder zu unterbrechen, und ein zweites Schaltelement in Form eines zweiten Ventilelementes, das in der zweiten Verbindungsleitung angeordnet ist und ausgebildet ist, die zweite Verbindung zu aktivieren oder zu unterbrechen. Die Kontrolleinrichtung ist mit dem Generator und der Schalteinrichtung verbunden und ausgebildet, das erste und zweite Schaltelement zwischen einer ersten Position und einer zweiten Position zu schalten, wobei in der ersten Position die erste bzw. zweite Verbindung aktiv ist, und in der zweiten Position, die erste bzw. zweite Verbindung unterbrochen ist.

Die bekannte Vorrichtung zum Positionieren von Partikeln weist den Nachteil auf, dass der Generator als Unterdruckeinrichtung und die Verbindungsleitungen als Druckleitungen ausgebildet sind. Außerdem sind die Schaltelemente als Ventilelemente ausgebildet, die in den Verbindungsleitungen angeordnet werden müssen. Die Verwendung von Druckleitungen und Ventilelementen ist für Vorrichtungen, die eine große Anzahl von einzeln ansteuerbaren Aufnahmeöffnungen aufweisen, ungeeignet, da mit der Anzahl an Aufnahmeöffnungen die Größe der Vorrichtung zunimmt.

### Darstellung der Erfindung

Die Aufgabe der vorliegenden Erfindung besteht in einer Weiterentwicklung der Vorrichtung zum Positionieren von Partikeln für eine große Anzahl von einzeln ansteuerbaren Aufnahmeöffnungen. Dabei soll der apparative Aufwand möglichst gering sein.

Diese Aufgabe wird bei der eingangs genannten Vorrichtung erfindungsgemäß durch die Merkmale des unabhängigen Anspruchs 1 gelöst. Vorteilhafte Weiterbildungen sind in den abhängigen Ansprüchen angegeben.

Erfindungsgemäß ist die Vorrichtung zum Positionieren von Partikeln dadurch gekennzeichnet, dass die Platte als Leiterplatte ausgebildet ist und die erste und zweite Aufnahmeöffnung mit einem elektrisch leitenden Material beschichtet und/oder befüllt sind, der Generator als elektrische Spannungsquelle, die eine Spannung zwischen einem ersten Pol und zweiten Pol erzeugt, ausgebildet ist, die erste Verbindungsleitung als erste elektrische Verbindungsleitung und die zweite Verbindungsleitung als zweite elektrische Verbindungsleitung ausgebildet ist. Die erfindungsgemäße Vorrichtung zum Positionieren von Partikeln hat den Vorteil, dass die Partikel durch elektrostatische Kräfte angezogen werden und die Leiterplatte sehr kompakt ausgebildet sein kann. Die Vorteile des kompakten Aufbaus nehmen mit zunehmender Anzahl von Aufnahmeöffnungen zu.

Bevorzugt ist die Platte als Leiterplatte aus einem elektrisch isolierenden Material ausgebildet, wobei die erste Aufnahmeöffnung und zweite Aufnahmeöffnung in die Leiterplatte integriert sind. Die Ausbildung der Platte als Leiterplatte aus einem elektrisch isolierenden Material hat den Vorteil, dass bekannte Technologien für Leiterplatten verwendet werden können.

Besonders bevorzugt umfassen die erste Verbindungsleitung und zweite Verbindungsleitung jeweils einen ersten Leitungsabschnitt, der als Leiterbahn in die Leiterplatte integriert ist, und einen zweiten Leitungsabschnitt, der den ersten Leitungsabschnitt mit dem Generator verbindet. Durch die Ausbildung der Platte als Leiterplatte aus einem elektrisch isolierenden Material kann die Vorrichtung kompakt ausgebildet werden. Die Leiterplatte wird bevorzugt aus mehreren übereinanderliegenden Schichten aufgebaut und die ersten Leitungsabschnitte der ersten und zweiten Verbindungsleitung werden als Leiterbahnen in die Leiterplatte integriert.

Die Leiterplatte ist aus einem elektrisch isolierenden Material aufgebaut, in das die erste Aufnahmeöffnung und zweite Aufnahmeöffnung integriert sind. Damit die erste und zweite Aufnahmeöffnung eine elektrostatische Kraft auf die Partikel ausüben können, müssen die erste und zweite Aufnahmeöffnung mit einem elektrisch leitenden Material beschichtet und/oder befüllt sein.

In einer ersten bevorzugten Variante sind die erste Aufnahmeöffnung und zweite Aufnahmeöffnung vollständig mit dem elektrisch leitenden Material befüllt. Dabei schließt das elektrisch leitende Material in der ersten und zweiten Aufnahmeöffnung bündig mit einer Unterseite der Leiterplatte ab. Eine vollständig mit dem elektrisch leitenden Material befüllte erste und zweite Aufnahmeöffnung hat den Vorteil, dass mittels der Leiterplatte unterschiedlich große Partikel positioniert werden können.

In einer zweiten bevorzugten Variante sind die erste Aufnahmeöffnung und zweite Aufnahmeöffnung teilweise mit dem elektrisch leitenden Material befüllt. Dabei bilden sich an der Unterseite der Leiterplatte Vertiefungen, die die Partikel aufnehmen können. Über die Größe der Querschnittsfläche, die die erste Aufnahmeöffnung und zweite Aufnahmeöffnung aufweisen, kann die Größe der Partikel, die positioniert werden können, bestimmt werden. Je geringer der Unterschied zwischen der Querschnittsfläche der ersten und zweiten Aufnahmeöffnung und der Querschnittsfläche der Partikel ist, umso genauer können die Partikel positioniert werden.

In einer dritten bevorzugten Variante sind die erste Aufnahmeöffnung und zweite Aufnahmeöffnung auf ihrer Innenseite mit dem elektrisch leitenden Material beschichtet. Dabei schließt das elektrisch leitende Material in der ersten Aufnahmeöffnung und zweiten Aufnahmeöffnung bündig mit der Unterseite der Leiterplatte ab, wobei in der Leiterplatte Vertiefungen entstehen, die die Partikel aufnehmen können. Über die Größe der Querschnittsfläche, die die Vertiefungen aufweisen, kann die Größe der Partikel, die positioniert werden können, bestimmt werden. Je geringer der Unterschied zwischen der Querschnittsfläche der Vertiefungen und der Querschnittsfläche der Partikel ist, umso genauer können die Partikel positioniert werden.

In einer Weiterentwicklung der Vorrichtung sind die Partikel auf einem Tisch, der mit einer Vibrationseinrichtung verbunden ist, angeordnet, wobei die Vibrationseinrichtung ausgebildet ist, die Partikel in Bewegung zu versetzen. Durch die Vibrationseinrichtung wird eine zusätzliche Kraft auf die Partikel ausgeübt, die das Aufnehmen der Partikel unterstützen kann.

Besonders bevorzugt ist die Vibrationseinrichtung ausgebildet, die Partikel in einer Richtung entgegen gerichtet zur Gravitationsrichtung in Bewegung zu versetzen. Durch die Bewegung der Partikel entgegen gerichtet zur Gravitationsrichtung wirkt die zusätzliche Kraft in Richtung der elektrostatischen Kraft und kann das Aufnehmen der Partikel unterstützen.

In einer Weiterentwicklung der Vorrichtung ist eine Zusatzeinrichtung vorgesehen, die ausgebildet ist, die Platte in Schwingung zu versetzen. Nach dem Ausschalten des Generators können die Partikel aufgrund von elektrostatischer Aufladung an der als Leiterplatte ausgebildeten Platte hängen bleiben. Die Zusatzeinrichtung kann das Lösen der Partikel von der Leiterplatte unterstützen, wobei die Zusatzeinrichtung nach dem Ausschalten des Generators oder zusätzlich zum Ausschalten des Generators aktiviert werden kann.

In einer ersten besonders bevorzugten Variante umfasst die Zusatzeinrichtung mindestens ein piezokeramisches Element. Bevorzugt können mehrere piezokeramische Elemente vorgesehen sein, die parallel zur Gravitationsrichtung übereinandergestapelt sind.

In einer ersten besonders bevorzugten Variante umfasst die Zusatzeinrichtung mindestens einen Vibrationsmotor, der als horizontaler Vibrationsmotor oder als vertikaler Vibrationsmotor ausgebildet sein kann. Bevorzugt können mehrere Vibrationsmotoren vorgesehen sein.

In einer ersten besonders bevorzugten Variante umfasst die Zusatzeinrichtung mindestens eine Spuleneinrichtung. Bevorzugt können mehrere Spuleneinrichtungen vorgesehen sein.

Die Erfindung betrifft außerdem ein Verfahren zum Positionieren von Partikeln, die auf einem Tisch angeordnet sind, mittels einer erfindungsgemäßen Vorrichtung nach einem der Ansprüche 1 bis 12. Das Verfahren umfasst die Schritte:
▪ Auswahl der ersten Aufnahmeöffnung, der zweiten Aufnahmeöffnung oder der ersten und zweiten Aufnahmeöffnung,
▪ Aufbau der ersten elektrischen Verbindung, der zweiten elektrischen Verbindung oder der ersten und zweiten elektrischen Verbindung,
▪ Einschalten des Generators und Erzeugen einer Potentialdifferenz zwischen der ersten Aufnahmeöffnung und einer Oberseite des Tisches, zwischen der zweiten Aufnahmeöffnung und der Oberseite des Tisches oder zwischen der ersten und zweiten Aufnahmeöffnung und der Oberseite des Tisches,
▪ Positionieren der Vorrichtung und
▪ Ausschalten des Generators.

Bei der erfindungsgemäßen Vorrichtung sind die erste Aufnahmeöffnung und zweite Aufnahmeöffnung einzeln ansteuerbar. In einem ersten Schritt des Verfahrens zum Positionieren von Partikeln werden die Aufnahmeöffnungen, die einen Partikel aufnehmen sollen, ausgewählt und in einem zweiten Schritt werden die elektrischen Verbindungen der ausgewählten Aufnahmeöffnungen zum Generator aufgebaut. In einem dritten Schritt wird der Generator eingeschaltet, so dass zwischen den ausgewählten Aufnahmeöffnungen und der Oberseite des Tisches, auf dem die Partikel angeordnet sind, eine Potentialdifferenz erzeugt wird und auf die Partikel eine elektrostatische Kraft wirkt. Damit die ausgewählten Aufnahmeöffnungen jeweils einen Partikel aufnehmen können, muss die elektrostatische Kraft grösser sein als die Gewichtskraft, die auf die Partikel wirkt. In einem vierten Schritt wird zumindest die Aufnahmeeinrichtung der Vorrichtung so angeordnet, dass die Partikel positioniert werden können. In einem fünften Schritt wird der Generator ausgeschaltet, so dass die Potentialdifferenz zwischen den ausgewählten Aufnahmeöffnungen und der Oberseite des Tisches verschwindet und die Partikel aufgrund der Gewichtskraft von den ausgewählten Aufnahmeöffnungen abfallen.

Bevorzugt wird nach dem Ausschalten des Generators oder zusätzlich zum Ausschalten des Generators eine Zusatzeinrichtung, die die Platte in Schwingung versetzt, aktiviert. Die Partikel können aufgrund von elektrostatischer Aufladung an der als Leiterplatte ausgebildeten Platte hängen bleiben, nachdem der Generator ausgeschaltet wurde und die Potentialdifferenz zwischen den ausgewählten Aufnahmeöffnungen und der Oberseite des Tisches verschwindet. Die Zusatzeinrichtung versetzt die Leiterplatte in Schwingung und unterstützt das Positionieren der Partikel.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Vorrichtung zum Positionieren von Partikeln, die eine Aufnahmeeinrichtung mit einer Leiterplatte und einen als elektrische Spannungsquelle ausgebildeten Generator umfasst, in einer schematischen Darstellung;
- FIGN. 2A-C: die Leiterplatte der FIG. 1 in einer ersten Variante (FIG. 2A), einer zweiten Variante (FIG. 2B) und einer dritten Variante (FIG. 2C);
- FIGN. 3A, B: die Vorrichtung der FIG. 1 vor dem Einschalten des Generators (FIG. 3A) und nach dem Einschalten des Generators (FIG. 3B);
- FIGN. 4A-C: eine Zusatzeinrichtung für die Vorrichtung der FIG. 1 in einer ersten Variante (FIG. 4A), einer zweiten Variante (FIG. 4B) und einer dritten Variante (FIG. 4C).

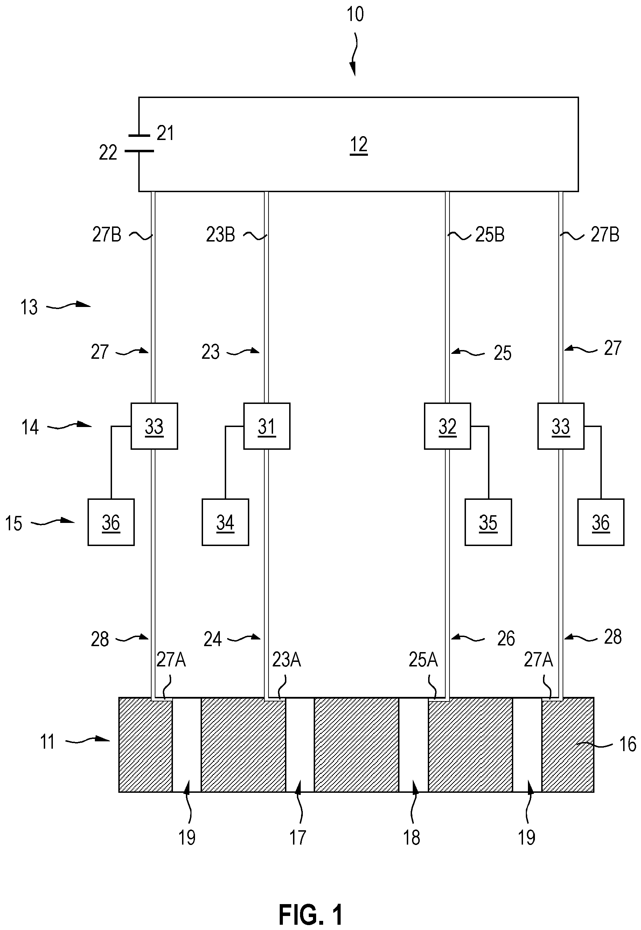

**FIG. 1** zeigt eine erfindungsgemäße Vorrichtung **10** zum Positionieren von Partikeln in einer schematischen Darstellung. Die Vorrichtung 10 umfasst eine Aufnahmeeinrichtung **11,** einen Generator **12,** der als elektrische Spannungsquelle ausgebildet ist, eine Verbindungseinrichtung **13,** die die Aufnahmeeinrichtung 11 mit dem Generator 12 verbindet, eine Schalteinrichtung **14** und eine Kontrolleinrichtung **15.**

Die Vorrichtung 10 eignet sich beispielsweise zum Positionieren von Partikeln, die als Hartstoffpartikel für Bearbeitungssegmente ausgebildet sind. Unter dem Begriff "Hartstoffpartikel" werden sämtliche Schleifmittel und Abrasivstoffe für Bearbeitungssegmente zusammengefasst; dazu gehören einzelne Hartstoffpartikel, Verbundteile aus mehreren Hartstoffpartikeln und beschichtete oder gekapselte Hartstoffpartikel.

Die Aufnahmeeinrichtung 11 umfasst eine als Leiterplatte ausgebildete Platte **16,** in der eine erste Aufnahmeöffnung **17** und eine zweite Aufnahmeöffnung **18** angeordnet sind. Die Leiterplatte 16 ist aus einem elektrisch isolierenden Material aufgebaut, in das die erste und zweite Aufnahmeöffnung 17, 18 integriert sind. Dabei sind die erste und zweite Aufnahmeöffnung 17, 18 mit einem elektrisch leitenden Material beschichtet und/oder befüllt. Im Ausführungsbeispiel der FIG. 1 weist die Leiterplatte 16 weitere Aufnahmeöffnungen **19** auf, die in die Leiterplatte 16 integriert sind und die mit dem elektrisch leitenden Material beschichtet und/oder befüllt sind. Der Generator 12 ist als elektrische Spannungsquelle ausgebildet, die eine Spannung zwischen einem ersten Pol **21** und einem zweiten Pol **22** erzeugt.

Die Verbindungseinrichtung 13 umfasst eine erste Verbindungsleitung **23,** die die erste Aufnahmeöffnung 17 über eine erste Verbindung **24** mit dem Generator 12 verbindet, und eine zweite Verbindungsleitung **25,** die die zweite Aufnahmeöffnung 18 über eine zweite Verbindung **26** mit dem Generator 12 verbindet. Außerdem umfasst die Verbindungseinrichtung 13 im Ausführungsbeispiel der FIG. 1 weitere Verbindungsleitungen **27,** die die weiteren Aufnahmeöffnungen 19 über weitere Verbindungen **28** mit dem Generator 12 verbinden. Da der Generator 12 als elektrische Spannungsquelle ausgebildet ist, sind die erste Verbindungsleitung 23, die zweite Verbindungsleitung 25 und die weiteren Verbindungsleitungen 27 als elektrische Verbindungsleitungen ausgebildet und die erste Verbindung 24, die zweite Verbindung 26 und die weiteren Verbindungen 28 sind als elektrische Verbindungen ausgebildet.

Die erste elektrische Verbindungsleitung 23 und die zweite elektrische Verbindungsleitung 25 umfassen jeweils einen ersten Leitungsabschnitt **23A, 25A,** der als Leiterbahn in die Leiterplatte 16 integriert ist, und einen zweiten Leitungsabschnitt **23B, 25B,** der den ersten Leitungsabschnitt 23A, 25A mit dem Generator 12 verbindet. Die weiteren elektrischen Verbindungsleitungen 27 umfassen jeweils einen ersten Leitungsabschnitt **27A,** der als Leiterbahn in die Leiterplatte 16 integriert ist, und einen zweiten Leitungsabschnitt **27B,** der den ersten Leitungsabschnitt 27A mit dem Generator 12 verbindet.

Die Schalteinrichtung 14 umfasst ein erstes Schaltelement **31,** das in der ersten Verbindungsleitung 23 angeordnet ist und ausgebildet ist, die erste elektrische Verbindung 24 zu unterbrechen, und ein zweites Schaltelement **32,** das in der zweiten Verbindungsleitung 25 angeordnet ist und ausgebildet ist, die zweite elektrische Verbindung 26 zu unterbrechen. Außerdem umfasst die Schalteinrichtung 14 im Ausführungsbeispiel der FIG. 1 weitere Schaltelemente **33,** die in den weiteren elektrischen Verbindungsleitungen 27 angeordnet sind und ausgebildet sind, die weiteren elektrischen Verbindungen 28 zu unterbrechen.

Die Kontrolleinrichtung 15 ist mit dem Generator 12 und der Schalteinrichtung 14 verbunden und ausgebildet, das erste Schaltelement 31 zwischen einer ersten und zweiten Position, das zweite Schaltelement 32 zwischen einer ersten und zweiten Position und die weiteren Schaltelemente 33 zwischen einer ersten und zweiten Position zu schalten. In der ersten Position des ersten Schaltelementes 31 ist die erste elektrische Verbindung 24 aktiv und in der zweiten Position des ersten Schaltelementes 31 ist die erste elektrische Verbindung 24 unterbrochen, in der ersten Position des zweiten Schaltelementes 32 ist die zweite elektrische Verbindung 26 aktiv und in der zweiten Position des zweiten Schaltelementes 32 ist die zweite elektrische Verbindung 26 unterbrochen und in der ersten Position der weiteren Schaltelemente 33 sind die weiteren elektrischen Verbindungen 28 aktiv und in der zweiten Position der weiteren Schaltelemente 33 sind die weiteren elektrischen Verbindungen 28 unterbrochen.

Die Kontrolleinrichtung 15 umfasst ein erstes Kontrollelement **34,** das mit dem ersten Schaltelement 31 verbunden ist, und ein zweites Kontrollelement **35,** das mit dem zweiten Schaltelement 32 verbunden ist. Außerdem umfasst die Kontrolleinrichtung 15 im Ausführungsbeispiel der FIG. 1 weitere Kontrollelemente **36,** die mit den weiteren Schaltelementen 33 verbunden sind. Das erste Kontrollelement 34, das zweite Kontrollelement 35 und die weiteren Kontrollelemente 36 können in ein gemeinsames Kontrollelement integriert werden oder als separate Kontrollelemente ausgebildet sein.

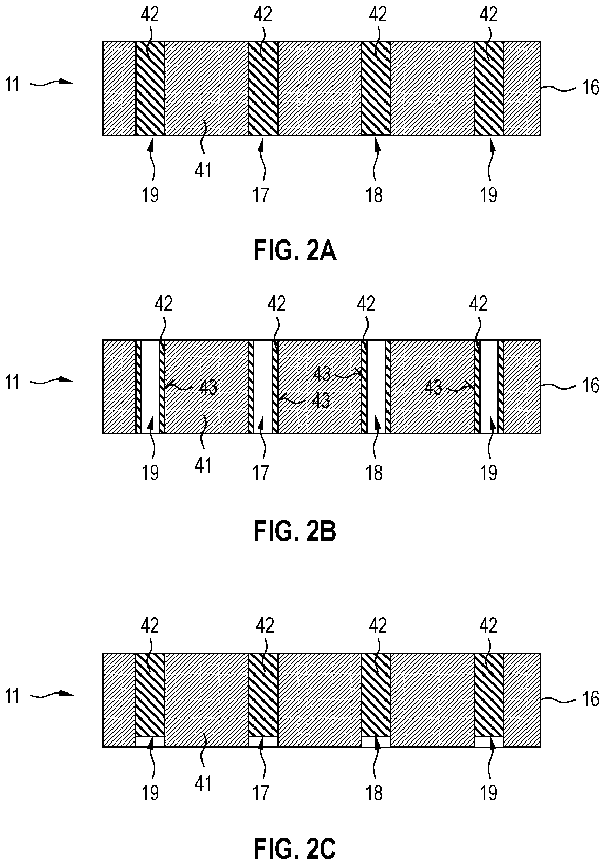

**FIGN. 2A-C** zeigen die Platte 16 mit der ersten Aufnahmeöffnung 17, der zweiten Aufnahmeöffnung 18 und zwei weiteren Aufnahmeöffnungen 19 in drei Varianten. Die Platte 16 ist als Leiterplatte aus einem elektrisch isolierenden Material **41** aufgebaut, in das die erste Aufnahmeöffnung 17, die zweite Aufnahmeöffnung 18 und die zwei weiteren Aufnahmeöffnungen 19 integriert sind.

Um auf Partikel eine elektrostatische Kraft ausüben zu können, müssen die Aufnahmeöffnungen 17, 18, 19 mit einem elektrisch leitenden Material **42** beschichtet und/oder befüllt sein. Dabei können die Aufnahmeöffnungen 17, 18, 19 vollständig mit dem elektrisch leitenden Material 42 befüllt sein, teilweise mit dem elektrisch leitenden Material 42 befüllt sein oder die Aufnahmeöffnungen 17, 18, 19 sind auf ihrer Innenseite mit dem elektrisch leitenden Material 42 beschichtet.

FIG. 2A zeigt die Aufnahmeöffnungen 17, 18, 19, die vollständig mit dem elektrisch leitenden Material 42 befüllt sind, FIG. 2B zeigt die Aufnahmeöffnungen 17, 18, 19, die auf ihrer Innenseite **43** mit dem elektrisch leitenden Material 42 beschichtet sind, und FIG. 2C zeigt die Aufnahmeöffnungen 17, 18, 19, die teilweise mit dem elektrisch leitenden Material 42 befüllt sind.

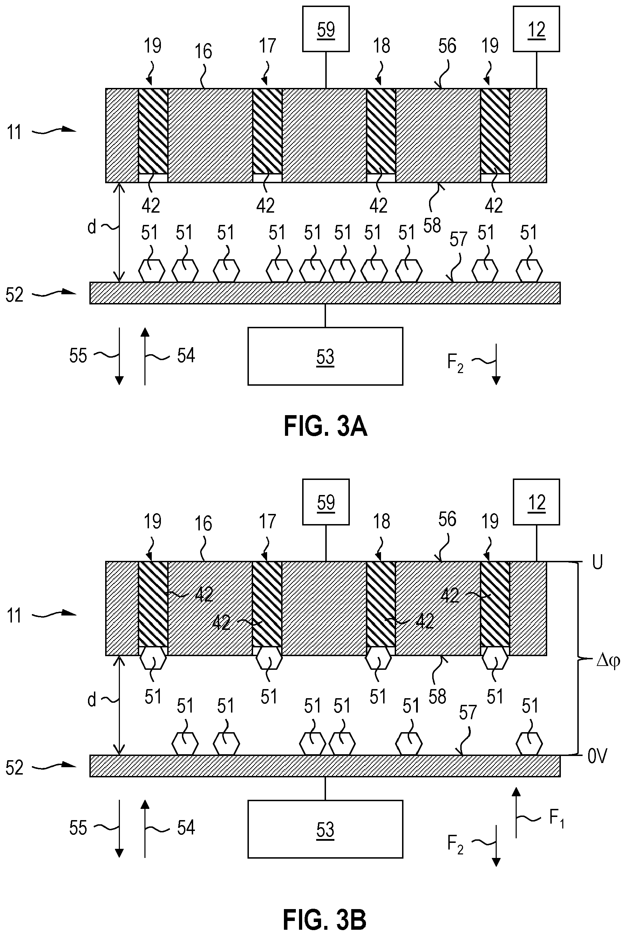

**FIGN. 3A****, B** zeigen die erfindungsgemäße Vorrichtung 10 zum Positionieren von Partikeln **51.** Dabei zeigt FIG. 3A die Vorrichtung 10 vor dem Einschalten des Generators 12 und FIG. 3B nach dem Einschalten des Generators 12. Die Partikel 51 sind auf einem Tisch **52** angeordnet, der mit einer Vibrationseinrichtung **53** verbunden ist. Die Vibrationseinrichtung 53 ist ausgebildet, die Partikel 51 in einer Richtung **54** entgegen gerichtet zur Gravitationsrichtung **55** in Bewegung zu versetzen.

Bei eingeschaltetem Generator 12 liegt zwischen einer Oberseite **56** der Leiterplatte 16 und einer Oberseite **57** des Tisches 52 eine Potentialdifferenz Δϕ vor, durch die eine elektrostatische Kraft **F₁** auf die Partikel 51 ausgeübt wird. Dabei ist der Betrag der elektrostatischen Kraft unter anderem von einem Abstand **d** zwischen der Leiterplatte 16 und der Oberseite 57 des Tisches 52 abhängig; es gilt, dass der Betrag der elektrostatischen Kraft F₁ mit abnehmendem Abstand d zunimmt.

Die Partikel 51 besitzen eine Masse, die im Gravitationsfeld der Erde proportional zum Betrag einer Gewichtskraft F₂ auf die Partikel 51 ist; die Richtung der Gewichtskraft F₂ auf die Partikel 51 verläuft entlang der Gravitationsrichtung 55. Um die Partikel 51 mittels der Vorrichtung 10 positionieren zu können, muss der Betrag der elektrostatischen Kraft F₁ grösser als der Betrag der Gewichtskraft F₂ sein; außerdem müssen die Richtungen der Kräfte F₁, F₂ einander entgegen gerichtet sein.

Die Leiterplatte 16 weist im Ausführungsbeispiel der FIGN. 3A, B die erste Aufnahmeöffnung 17, die zweite Aufnahmeöffnung 18 und die zwei weiteren Aufnahmeöffnungen 19 auf. Die Aufnahmeöffnungen 17, 18, 19 der Leiterplatte 16 sind im Ausführungsbeispiel der FIGN. 3A, B teilweise mit dem elektrisch leitenden Material 42 befüllt und weisen an einer Unterseite **58** der Leiterplatte 16 Vertiefungen auf, die die Partikel 51 aufnehmen können.

Die Leiterplatte einer erfindungsgemäßen Vorrichtung zum Positionieren von Partikeln weist üblicherweise mehr als die erste Aufnahmeöffnung 17 und zweite Aufnahmeöffnung 18 auf. Bei der Ausführung des erfindungsgemäßen Verfahren zum Positionieren von Partikeln werden in einem ersten Schritt die Aufnahmeöffnungen ausgewählt, die einen Partikel 51 aufnehmen sollen. Im Ausführungsbeispiel der FIGN. 3A, B werden alle Aufnahmeöffnungen 17, 18, 19 ausgewählt, einen Partikel 51 aufzunehmen. Bei einer Aufnahmeeinrichtung, die nur die erste Aufnahmeöffnung 17 und zweite Aufnahmeöffnung 18 aufweist, ergeben sich drei Varianten: Auswahl der ersten Aufnahmeöffnung 17, Auswahl der zweiten Aufnahmeöffnung 18 oder Auswahl der ersten und zweiten Aufnahmeöffnung 17, 18. In einem zweiten Schritt werden die elektrischen Verbindungen zwischen den ausgewählten Aufnahmeöffnungen und dem Generator 12 aufgebaut. Im Ausführungsbeispiel der FIGN. 3A, B werden die erste elektrische Verbindung 24, die zweite elektrische Verbindung 26 und die weiteren elektrischen Verbindungen 28 aufgebaut. Bei einer Aufnahmeeinrichtung, die nur die erste Aufnahmeöffnung 17 und zweite Aufnahmeöffnung 18 aufweist, ergeben sich drei Varianten: Aufbau der ersten elektrischen Verbindung 24, Aufbau der zweiten elektrischen Verbindung 26 oder Aufbau der ersten elektrischen Verbindung 24 und zweiten elektrischen Verbindung 26.

Damit die ausgewählten Aufnahmeöffnungen 17, 18, 19 jeweils einen Partikel 51 aufnehmen können, wird der Generator 12 in einem dritten Schritt des Verfahrens eingeschaltet (FIG. 3B). Bei eingeschaltetem Generator 12 liegt zwischen der Oberseite 56 der Leiterplatte 16 und der Oberseite 57 des Tisches 52 die Potentialdifferenz Δϕ vor. Nachdem von den ausgewählten Aufnahmeöffnungen 17, 18, 19 jeweils einen Partikel 51 aufgenommen wurde, wird die Aufnahmeeinrichtung 11 in einem vierten Schritt in eine Position verschoben, in der die Partikel 51 positioniert werden. Zum Positionieren der Partikel 51 wird der Generator 12 ausgeschaltet. Durch das Ausschalten des Generators 12 verschwindet die elektrostatische Kraft F₁, auf die Partikel 51 wirkt ausschließlich die Gewichtskraft F₂, die in Richtung der Gravitationsrichtung 55 wirkt.

Durch eine elektrostatische Aufladung können die Partikel 51 nach dem Ausschalten des Generators 12 an der Leiterplatte 16 hängen bleiben. Um das Lösen der Partikel 51 von der Leiterplatte 16 zu unterstützen, kann eine Zusatzeinrichtung **59** eingesetzt werden, die die Leiterplatte 16 in Schwingung versetzt. Die Zusatzeinrichtung 59 kann nach dem Ausschalten des Generators 12 oder zusätzlich zum Ausschalten des Generators 12 aktiviert werden.

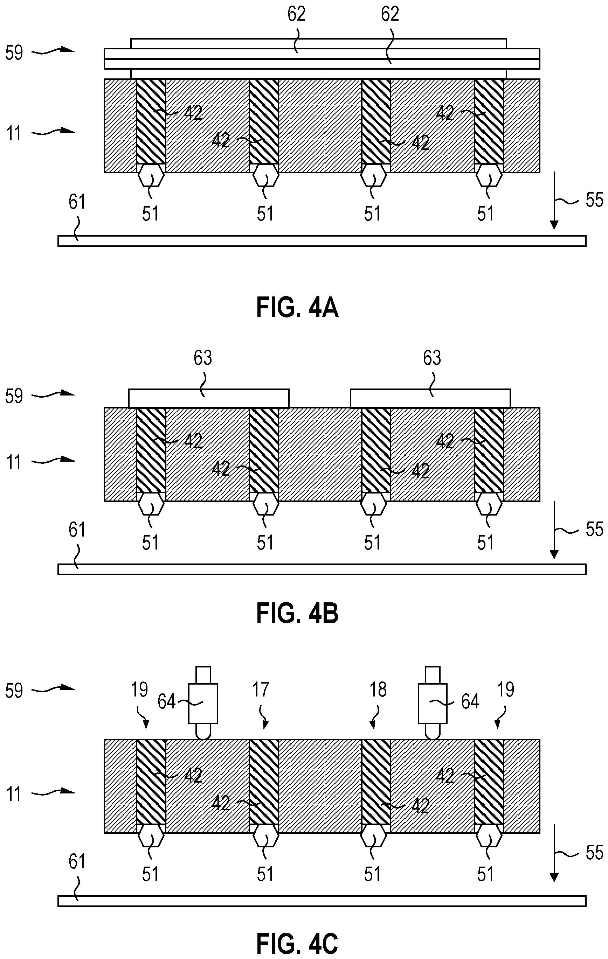

**FIGN. 4A-C** zeigen die Leiterplatte 16 der Aufnahmeeinrichtung 11, wobei die Leiterplatte 16 mit der Zusatzeinrichtung 59 verbunden ist. Die Zusatzeinrichtung 59 dient dazu, die Partikel 51 auf einer Unterlage **61** zu positionieren. FIG. 4A zeigt eine erste Variante der Zusatzeinrichtung 59, FIG. 4B eine zweite Variante der Zusatzeinrichtung 59 und FIG. 4C eine dritte Variante der Zusatzeinrichtung 59.

FIG. 4A zeigt die Zusatzeinrichtung 59, die mindestens ein piezokeramisches Element **62** umfasst. Im Ausführungsbeispiel der FIG. 4A sind zwei piezokeramische Elemente 62 vorgesehen, die parallel zur Gravitationsrichtung 55 übereinandergestapelt sind.

FIG. 4B zeigt die Zusatzeinrichtung 59, die mindestens einen Vibrationsmotor **63** umfasst. Im Ausführungsbeispiel der FIG. 4B sind zwei Vibrationsmotoren 63 vorgesehen, die als horizontale Vibrationsmotoren ausgebildet sind. Alternativ kann der Vibrationsmotor 63 als vertikaler Vibrationsmotor ausgebildet sein.

FIG. 4C zeigt die Zusatzeinrichtung 59, die mindestens eine Spuleneinrichtung **64** umfasst. Im Ausführungsbeispiel der FIG. 4C sind zwei Spuleneinrichtungen 64 vorgesehen.

## Patentansprüche

1. Vorrichtung (10) zum Positionieren von Partikeln (51), aufweisend:
▪ eine Aufnahmeeinrichtung (11) mit einer Platte (16), in der eine erste Aufnahmeöffnung (17) und eine zweite Aufnahmeöffnung (18) angeordnet sind,
▪ einen Generator (12),
▪ eine Verbindungseinrichtung (13) mit einer ersten Verbindungsleitung (23), die die erste Aufnahmeöffnung (17) über eine erste Verbindung (24) mit dem Generator (12) verbindet, und einer zweiten Verbindungsleitung (25), die die zweite Aufnahmeöffnung (18) über eine zweite Verbindung (26) mit dem Generator (12) verbindet,
▪ eine Schalteinrichtung (14) mit einem ersten Schaltelement (31), das in der ersten Verbindungsleitung (23) angeordnet ist und ausgebildet ist, die erste Verbindung (24) zu unterbrechen, und einem zweiten Schaltelement (32), das in der zweiten Verbindungsleitung (25) angeordnet ist und ausgebildet ist, die zweite Verbindung (26) zu unterbrechen, und
▪ eine Kontrolleinrichtung (15), die mit dem Generator (12) und der Schalteinrichtung (14) verbunden ist und ausgebildet ist, das erste Schaltelement (31) und zweite Schaltelement (32) zwischen einer ersten Position, in der die erste bzw. zweite Verbindung (24, 26) aktiv ist, und einer zweiten Position, in der die erste bzw. zweite Verbindung (24, 26) unterbrochen ist, zu schalten,
**dadurch gekennzeichnet, dass** die Platte (16) als Leiterplatte ausgebildet ist und die erste und zweite Aufnahmeöffnung (17, 18) mit einem elektrisch leitenden Material (42) beschichtet und/oder befüllt sind, der Generator (12) als elektrische Spannungsquelle, die eine elektrische Spannung zwischen einem ersten Pol (21) und zweiten Pol (22) erzeugt, ausgebildet ist, die erste Verbindungsleitung (23) als erste elektrische Verbindungsleitung und die zweite Verbindungsleitung (25) als zweite elektrische Verbindungsleitung ausgebildet ist.

2. Vorrichtung nach Anspruch 1, **dadurch gekennzeichnet, dass** die Platte (16) als Leiterplatte aus einem elektrisch isolierenden Material (41) ausgebildet ist, wobei die erste Aufnahmeöffnung (17) und zweite Aufnahmeöffnung (18) in die Leiterplatte (16) integriert sind.

3. Vorrichtung nach Anspruch 2, **dadurch gekennzeichnet, dass** die erste Verbindungsleitung (23) und zweite Verbindungsleitung (25) jeweils einen ersten Leitungsabschnitt (23A, 25A), der als Leiterbahn in die Leiterplatte (16) integriert ist, und einen zweiten Leitungsabschnitt (23B, 25B), der den ersten Leitungsabschnitt (23A, 25A) mit dem Generator (12) verbindet, umfassen.

4. Vorrichtung nach einem der Ansprüche 1 bis 3, **dadurch gekennzeichnet, dass** die erste Aufnahmeöffnung (17) und zweite Aufnahmeöffnung (18) vollständig mit dem elektrisch leitenden Material (42) befüllt sind.

5. Vorrichtung nach einem der Ansprüche 1 bis 3, **dadurch gekennzeichnet, dass** die erste Aufnahmeöffnung (17) und zweite Aufnahmeöffnung (18) teilweise mit dem elektrisch leitenden Material (42) befüllt sind.

6. Vorrichtung nach einem der Ansprüche 1 bis 3, **dadurch gekennzeichnet, dass** die erste Aufnahmeöffnung (17) und zweite Aufnahmeöffnung (18) auf ihrer Innenseite (43) mit dem elektrisch leitenden Material (42) beschichtet sind.

7. Vorrichtung nach einem der Ansprüche 1 bis 6, **dadurch gekennzeichnet, dass** die Partikel (51) auf einem Tisch (52), der mit einer Vibrationseinrichtung (53) verbunden ist, angeordnet sind, wobei die Vibrationseinrichtung (53) ausgebildet ist, die Partikel (51) in Bewegung zu versetzen.

8. Vorrichtung nach Anspruch 7, **dadurch gekennzeichnet, dass** die Vibrationseinrichtung (53) ausgebildet ist, die Partikel (51) in einer Richtung (54) entgegen gerichtet zur Gravitationsrichtung (55) in Bewegung zu versetzen.

9. Vorrichtung nach einem der Ansprüche 1 bis 8, **gekennzeichnet durch** eine Zusatzeinrichtung (59), die ausgebildet ist, die Platte (16) in Schwingung zu versetzen.

10. Vorrichtung nach Anspruch 9, **dadurch gekennzeichnet, dass** die Zusatzeinrichtung (59) mindestens ein piezokeramisches Element (62) umfasst.

11. Vorrichtung nach Anspruch 9, **dadurch gekennzeichnet, dass** die Zusatzeinrichtung (59) mindestens einen Vibrationsmotor (63) umfasst.

12. Vorrichtung nach Anspruch 9, **dadurch gekennzeichnet, dass** die Zusatzeinrichtung (59) mindestens eine Spuleneinrichtung (64) umfasst.

13. Verfahren zum Positionieren von Partikeln (51), die auf einem Tisch (52) angeordnet sind, mittels der Vorrichtung (10) nach einem der Ansprüche 1 bis 12, mit den Schritten:
▪ Auswahl der ersten Aufnahmeöffnung (17), der zweiten Aufnahmeöffnung (18) oder der ersten und zweiten Aufnahmeöffnung (17, 18),
▪ Aufbau der ersten elektrischen Verbindung (24), der zweiten elektrischen Verbindung (26) oder der ersten und zweiten elektrischen Verbindung (24, 26),
▪ Einschalten des Generators (12) und Erzeugen einer Potentialdifferenz zwischen der ersten Aufnahmeöffnung (17) und einer Oberseite (57) des Tisches (52), zwischen der zweiten Aufnahmeöffnung (18) und der Oberseite (57) des Tisches (52) oder zwischen der ersten und zweiten Aufnahmeöffnung (17, 18) und der Oberseite (57) des Tisches (52),
▪ Positionieren der Vorrichtung (10) und
▪ Ausschalten des Generators (12).

14. Verfahren nach Anspruch 13, **dadurch gekennzeichnet, dass** nach dem Ausschalten des Generators (12) oder zusätzlich zum Ausschalten des Generators (12) eine Zusatzeinrichtung (59), die die Platte (16) in Schwingung versetzt, aktiviert wird.
